# DEMANDE DE BREVET EUROPEEN

(11) **EP 0 652 403 A1**
(43) Date de publication de la demande: **10.05.1995**
(21) Numéro de dépôt: 94870173.5
(22) Date de dépôt: 04.11.1994
(51) Int. Cl.: F23G 7/00, F23G 5/44, F23D 11/10

(54) **Perfectionnements aux installations d'incinération de liquides comportant un ou plusieurs brûleurs du type oxy-fuel**

(30) Priorité: 05.11.1993 BE 9301227
(71) Demandeur: HEURBEL S.A., B-4020 Liège (BE); SOTRENOR S.A., F-62710 Courrières (FR)
(72) Inventeur: El Lakkis, Khaled, B-4020 Liege (BE); Crespin, Pierre, B-4130 Esneux (BE); Sohet, Jacques, B-5372 Mean Wannehain (BE); Devynck, Jean-Michel, F-59830 Cysoing (FR); Clary, Alain, F-59268 Roost-Warendin (FR)
(74) Mandataire: Van Malderen, Michel

(57) **Abrégé**

Installation d'incinération (1) de matières liquides comportant un ou plusieurs brûleurs (2) fonctionnant selon le principe des brûleurs oxy-fuel, caractérisée en ce que dans le brûleur (2) le fuel est pulvérisé à l'aide d'oxygène ou d'air enrichi en oxygène alimenté dans le cône de pulvérisation (41) du fuel et que l'installation comporte au moins une lance (4) d'injection du liquide à incinérer.

## Description

### Objet de l'invention

La présente invention porte sur des installations d'incinération de liquides comportant un ou plusieurs brûleurs fonctionnant selon le principe des brûleurs oxy-fuel, c'est-à-dire des brûleurs utilisant du fuel, en particulier du fuel lourd comme combustible et de l'oxygène ou de l'air enrichi en oxygène comme comburant.

Ce type de brûleur est très largement utilisé dans l'industrie. Les applications les plus courantes sont les fours de fusion.

### Arrière-plan technologique

Les brûleurs oxy-fuel classiques prévus pour les combustibles liquides sont munis d'un système de pulvérisation. Celle-ci peut être effectuée de deux manières différentes:
- pulvérisation mécanique: l'élément de pulvérisation est soit une pièce mécanique en rotation ou une pression statique transformée en pression dynamique.
- pulvérisation assistée (le plus courant): l'élément pulvérisateur est soit de l'air comprimé ou de la vapeur d'eau.

Les brûleurs oxy-fuel classiques de ce type présentent un certain nombre d'inconvénients parmi lesquels on peut citer le fait que le brûleur oxy-fuel ne peut pas assurer une combustion avec de l'air atmosphérique. Il en résulte qu'en cas de problème sur un des équipements d'alimentation de l'oxygène, l'arrêt de l'installation s'impose.

De plus, la distribution de l'oxygène dans les brûleurs oxy-fuel classiques se fait habituellement à l'extérieur du cône de pulvérisation. Ceci a pour conséquence que le mélange fuel-oxygène se produit dans le foyer. Dès lors, on peut dire qu'il y a presque toujours une perte de rendement vu la possibilité que des molécules d'oxygène puissent ne pas participer à la combustion et qu'elles s'échappent vers l'ambiance du foyer.

Or, l'exigence des utilisateurs, en particulier pour les usages dans des fours d'incinération, est d'obtenir une flamme toujours plus chaude et bien entendu des rendements élevés, tout en assurant un déroulement convenable de l'incinération, en particulier de l'incinération de liquides chargés.

Le document PATENT ABSTRACTS OF JAPAN, Vol 8, n° 26 (M-273) 3 février 1984 décrit un dispositif adapté pour réaliser une combustion stable à l'aide d'une flamme stable dans lequel une chambre de combustion s'ouvre vers l'extérieur sous un angle spécifique (60 à 120 dégrés). Il comporte des orifices périphériques amenant un courant secondaire d'oxygène à la pointe d'un ajutage de pulvérisation du combustible. Le brûleur comporte une double enveloppe de refroidissement s'étendant jusqu'à l'extrémité de la chambre de combustion.

Un courant primaire d'oxygène débouche à proximité de l'extrémité de la chambre de combustion et la profondeur de la chambre de combustion est choisie en fonction du diamètre de la périphérie des orifices du courant secondaire d'oxygène.

Le brûleur convient pour des incinérateurs à fusion thermique et vise la vitrification à haute température..

La technique mise en oeuvre et les moyens utilisés (double enveloppe, double courant d'oxygène, pulvérisation périphérique) indiquent que des précautions particulières sont nécessaires pour opérer dans de bonnes conditions.

L'utilisation d'oxygène pour pulvériser des combustibles liquides ou même solides dans d'autres secteurs d'utilisation a déjà été préconisée.

Le document EP-A-0 167 049 propose de réaliser cette opération hors de l'ajutage ou tuyère de pulvérisation en utilisant deux tubes co-axiaux, le tube central servant au combustible et le tube extérieur à l'oxygène. L'utilisation pour la fusion du verre est mentionnée.

Le document EP-A-0 473 906 propose un brûleur de conception particulière afin d'assurer la pulvérisation du combustible et protéger le brûleur. Ce fluide peut être de l'oxygène ou de l'air enrichi en oxygène. Le document mentionne qu'on estimait qu'il n'était pas possible d'utiliser l'oxygène pour la pulvérisation pour des raisons techniques. Le document ne mentionne pas de secteurs particuliers d'application de tels brûleurs.

Le document EP-A-0 263 250 s'adresse à un type particulier d'application qualifié de "post-mixed burner" dans lequel des passages séparés hors du brûleur, reçoivent du combustible et un comburant. Ceux-ci se mélangent et subissent la combustion. On mentionne que la pulvérisation d'un combustible peut se réaliser entre-autres à l'aide d'air enrichi en oxygène ou d'oxygène pur.

Le document GB-A-1 371 978 décrit l'utilisation dans des fours à cuve, en particulier des hauts-fourneaux, de brûleurs de combustibles liquides de conception particulière et indique que l'oxygène pur ou un mélange d'oxygène peut être utilisé. Le document DATABASE WPI, section Ch. Week 7114, Derment Publications, Ldt., London GB, class 24, AN 71-23934S, décrit un dispositif semblable pour le même usage.

Le document GB-A-2 140 910 décrit un brûleur pour chauffer des cuves à verre comportant un conduit central d'admission de combustible liquide et un conduit extérieur pour pulvériser ce combustible à l'aide d'oxygène ou d'un gaz riche en oxygène.

Le document EP-A-0 458 685 décrit un dispositif de pulvérisation de liquide, en particulier de combustibles, avec formation d'un "préfilm".

### Buts visés par l'invention

La présente invention vise à profiter d'une performance générale accrue des brûleurs en recourant à la technique dite oxy-fuel (se caractérisant par température élevée, rendement et disponibilité), sans modification fondamentale des brûleurs traditionnels dans des incinérateurs de matières liquides, généralement des matières liquides chargées de diverses matières polluantes devant être incinérées.

A titre complémentaire, l'invention vise à fournir pour des installations d'incinération du type mentionné, un brûleur qui puisse, sans aucune difficulté, continuer à fonctionner à l'air atmosphérique en cas de défaillance des équipements d'alimentation de l'oxygène ou de l'air enrichi en oxygène

### Eléments caractéristiques de l'invention

L'invention porte sur une installation d'incinération de matières liquides , en particulier de matières liquides chargées en polluants, comportant un ou plusieurs brûleurs fonctionnant selon le principe des brûleurs oxy-fuel, caractérisée en ce que dans le brûleur le fuel est pulvérisé à l'aide d'oxygène ou d'air enrichi en oxygène alimenté dans le cône de pulvérisation du fuel et que l'installation comporte au moins une lance d'injection du liquide à incinérer.

On entend par fuel (ou fioul) des hydrocarbures liquides du type fuels lourds ou fuels extra lourds ou même des huiles résiduaires.

L'invention repose sur l'observation que dans des incinérateurs de liquides chargés, dans ces conditions la pulvérisation du fuel à l'aide d'oxygène ou à l'aide d'air enrichi en oxygène, c'est-à-dire en assurant le mélange dans le brûleur se traduit par l'effet remarquable qu'il devient possible d'atteindre des températures d'une combustion d'un brûleur oxy-fuel, combiné avec un effet de protection de brûleur.

De plus, on garde ainsi la possibilité de fonctionnement avec de l'air atmosphérique et on assure un mélange intime du fuel et du comburant avant la flamme, d'où une utilisation meilleure de l'oxygène introduit.

Aucun changement de la conception (design) du brûleur dit "traditionnel" c'est-à-dire autre qu'un brûleur oxy-fuel n'est nécessaire et on peut de plus réaliser une importante économie en air comprimé (ou vapeur d'eau) de pulvérisation.

Généralement, les spécialistes estiment qu'il est nécessaire pour réduire la teneur en imbrûlés solides et gazeux (CO) d'utiliser un excès d'air de combustion, ce qui implique nécessairement une chute du rendement. Selon la technique de l'invention, un tel excès d'air de combustion dans le brûleur n'est plus nécessaire, à cause du mélange intime du fuel et du comburant qui est obtenu. Ceci se traduit par conséquent par un avantage supplémentaire au niveau de l'exploitation et de l'économie générale des opérations.

Le brûleur selon l'invention peut donc fonctionner avec de l'oxygène pur ou encore avec de l'air comprimé enrichi en oxygène, tout en permettant le fonctionnement avec de l'air atmosphérique en cas de nécessité.

L'utilisation concomitante de vapeur d'eau dans le cône de pulvérisation reste possible, d'autant plus que l'installation n'est pas fondamentalement modifiée.

Avantageusement, la lance d'injection du liquide à incinérer assure également une fine pulvérisation de ce liquide, soit par pulvérisation mécanique, soit par pulvérisation assistée, de préférence à l'aide d'air comprimé, ou encore par de la vapeur d'eau ou même par de l'oxygène ou de l'air enrichi en oxygène.

L'invention sera décrite plus en détail en référence à une forme d'exécution préférée de celle-ci mais ne présentant aucun caractère limitatif. Des détails complémentaires et avantages spécifiques de l'invention apparaîtront à l'homme de l'art à sa lecture.

### Brève description des figures

La figure 1 représente une installation d'incinération de liquides chargés selon l'invention, équipée d'un brûleur selon l'invention.
La figure 2 représente un schéma général d'un brûleur convenant pour un incinérateur de type indiqué, comme un brûleur oxy-fuel fonctionnant selon le principe de l'invention;
la figure 3 représente en coupe une tête de pulvérisation d'un brûleur selon la figure 2;
la figure 4 est une vue frontale (selon A) de la tête de pulvérisation de la figure 3;
les figures 5A et 5B sont des vues respectivement en coupe et frontale du distributeur; et les figures 6A et 6B sont des vues similaires de la pastille de pulvérisation.

### Description détaillée d'une forme d'exécution de l'invention

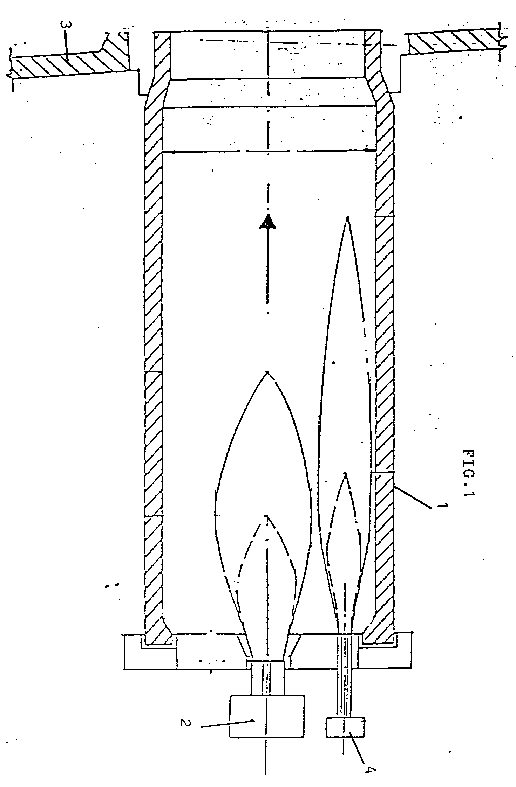

Dans la figure 1, on a représenté schématiquement une installation d'incinération 1 comportant un seul brûleur 2, étant entendu que le recours à plusieurs brûleurs peut être envisagé.

L'installation peut être du type four rotatif ou statique et débouche vers une chambre de postcombustion 3 représentée de manière très partielle par sa paroi dans laquelle débouche le four d'incinération.

L'installation comporte une et de préférence plusieurs lances de pulvérisation 4 alimentées en liquide chargé devant subir l'incinération dans cette installation. La pulvérisation de ce liquide est assurée par une amenée d'air ou de gaz de pulvérisation. Ledit liquide chargé peut être constitué par de l'eau ou un autre liquide, ou une boue comportant une charge, généralement une charge polluante devant subir une incinération.

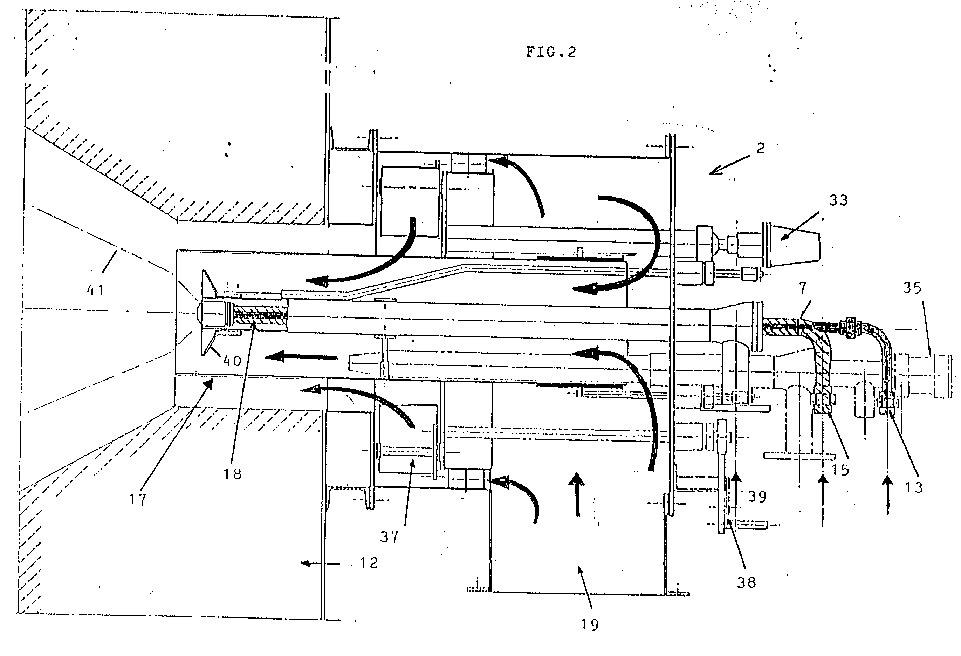

Le brûleur représenté schématiquement à la figure 2 par le repère général 2 est monté classiquement dans un ouvreau réfractaire 12 et comporte de manière classique un conduit d'alimentation du combustible liquide 13, généralement du fuel lourd ou extra-lourd, un conduit 15 d'alimentation en fonctionnement normal d'oxygène ou d'air enrichi en oxygène, ces deux conduits débouchant dans une canne de pulvérisation 17.

La canne de pulvérisation 17 communique avec une tête de brûleur 18 dans laquelle la pulvérisation du combustible est réalisée à l'aide d'oxygène ou d'air enrichi en oxygène. De manière classique, le brûleur 2 peut être également alimenté en air de combustion secondaire par une gaine 19.

Les équipements habituels d'un brûleur dit traditionnel, c'est-à-dire autre qu'un brûleur oxy-fuel, notamment la cellule de contrôle de flamme 33, l'allumeur 35, les ventelles 37 de réglage de la dimension de la flamme commandées par une poignée de réglage 38, une éventuelle amenée d'air de refroidissement 39, un accrocheur de flamme 40 etc. équipent ce brûleur 2. Le principe essentiel de l'invention est constitué par le fait que le combustible pénètre centralement dans cette tête de pulvérisation, le fluide de pulvérisation constitué en l'occurrence en fonctionnement normal par de l'oxygène ou de l'air fortement enrichi en oxygène étant alimenté également dans cette tête de pulvérisation afin d'obtenir un cône de pulvérisation de fuel qui a reçu le repère 41, (figure 2).

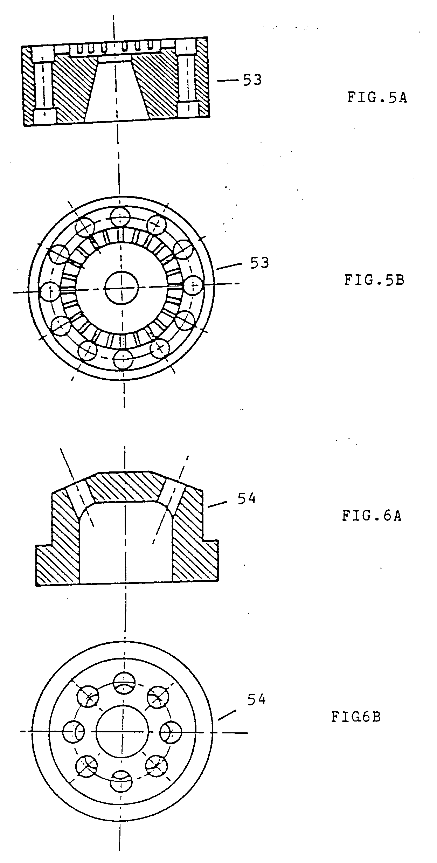

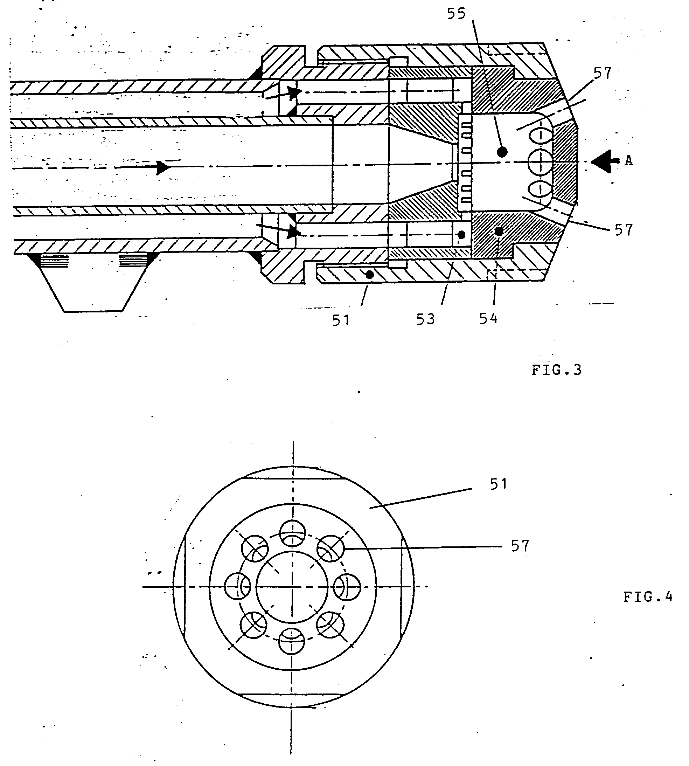

Le détail de la tête de pulvérisation dans les figures 3 et 4 laisse apparaître l'écrou 51, le distributeur tourbilloneur 53, la pastille de pulvérisation 54 qui délimite la chambre de mélange 55 où se réalise le contact intime de mélange combustible/comburant. Les orifices de sortie (57) de la pastille permettent la pulvérisation à la sortie de cette chambre 55.

Cette tête de pulvérisation comporte un distributeur 53 (représenté aux figures 5A et 5B) et une pastille de pulvérisation 54 (représentée aux figures 6A et 6B).

En fonctionnement avec de l'air atmosphérique une sonde thermique disposée sur la face avant de la pastille de pulvérisation atteint une température de 94 à 105°C. Lors de la pulvérisation selon l'invention à l'aide d'oxygène des températures de l'ordre de 500°C sont atteintes. On peut comprendre que le rayonnement de la flamme sur le liquide injecté est fortement accru, en accroissant ainsi le rendement total de l'installation sans cependant que des températures prohibitives ne risquent de détruire le brûleur.

Ce type de fonctionnement du brûleur permet essentiellement d'obtenir, avec un brûleur "traditionnel", une combustion oxy-fuel.

En cas de défaillance des systèmes d'alimentation en oxygène, le fluide de pulvérisation peut être remplacé sans interruption par de l'air atmosphérique, étant entendu cependant qu'on observe dans ce cas une diminution de la température de flamme et des rendements plus réduits.

Bien que l'on ait décrit une forme d'exécution préférée de l'invention, il doit être entendu que de nombreuses modifications et mises au point peuvent être apportées tout en restant dans le cadre de la protection. On observera que fondamentalement les équipements classiques sont préservés et que les installations existantes peuvent être aisément modifiées pour s'adapter à la technique de l'invention.

Selon l'invention, le four d'incinération peut être équipé de plusieurs brûleurs 2 du type indiqué et chaque brûleur 2 peut comporter plusieurs lances d'injection pour le liquide à incinérer.

## Revendications

1. Installation d'incinération (1) de matières liquides comportant un ou plusieurs brûleurs (2) fonctionnant selon le principe des brûleurs oxy-fuel, caractérisée en ce que dans le brûleur (2) le fuel est pulvérisé à l'aide d'oxygène ou d'air enrichi en oxygène alimenté dans le cône de pulvérisation (41) du fuel et que l'installation comporte au moins une lance (4) d'injection du liquide à incinérer.

2. Installation selon la revendication 1 caractérisée en ce que la vapeur d'eau est injectée concomitamment dans le cône de pulvérisation.

3. Installation selon la revendication 1 ou 2 caractérisée en ce que la lance d'injection (4) du liquide à incinérer assure une fine pulvérisation de ce liquide.

4. Installation selon la revendication 3 caractérisée en ce que ladite pulvérisation du liquide à incinérer est assistée par pulvérisation mécanique.

5. Installation selon la revendication 3 caractérisée en ce que ladite pulvérisation du liquide à incinérer est assurée par de l'air comprimé, par de la vapeur d'eau ou par de l'oxygène ou de l'air enrichi en oxygène.

6. Installation selon l'une quelconque des revendications précédentes caractérisée en ce que le brûleur utilisé est un brûleur traditionnel conçu pour fonctionner à l'air atmosphérique.
